# EUROPÄISCHE PATENTSCHRIFT

(11) **EP 4 069 578 B1**
(45) Veröffentlichungstag und Bekanntmachung des Hinweises auf die Patenterteilung: **16.04.2025**
(21) Anmeldenummer: 20811606.1
(22) Anmeldetag: 23.11.2020
(51) Int. Cl.: B62D 35/00

(54) **KRAFTFAHRZEUG MIT DACHSPOILER**
MOTOR VEHICLE WITH ROOF SPOILER
VÉHICULE AUTOMOBILE À BECQUET DE TOIT

(30) Priorität: 06.12.2019 DE 102019008489
(43) Veröffentlichungstag der Anmeldung: 12.10.2022
(73) Patentinhaber: MAN Truck & Bus SE, 80995 München (DE)
(72) Erfinder: SCHMITZ, Andreas, 80995 München (DE)
(74) Vertreter: v. Bezold & Partner Patentanwälte - PartG mbB
(86) Internationale Anmeldenummer: PCT/EP2020/083039
(87) Internationale Veröffentlichungsnummer: WO 2021/110450

(56) Entgegenhaltungen:
- EP-A1- 0 033 648
- EP-A1- 2 504 222
- WO-A2-2007/090172
- DE-A1- 19 825 252
- DE-A1- 3 737 380
- DE-A1- 3 800 742
- FR-A1- 2 875 197
- US-A- 4 779 915
- US-A- 4 904 015
- US-B1- 6 428 084

## Beschreibung

Die Erfindung betrifft ein Kraftfahrzeug, vorzugsweise ein Nutzfahrzeug, mit einem Dachspoiler.

Kraftfahrzeuge, insbesondere Lastkraftwagen, können einen höhenverstellbaren Dachspoiler aufweisen. Mittels der Höhenverstellung kann eine Ausrichtung des Dachspoilers bezüglich einer vorderen Oberkante eines Ladeaufbaus, eines Aufliegers oder eines Anhängers angepasst werden. Die Höhenverstellung erfolgt herkömmlich manuell an einer Rückwand eines Fahrerhauses des Lastkraftwagens.

Kraftfahrzeuge können zur Reinigung der Windschutzscheibe eine Scheibenreinigungsanlage aufweisen. Die Scheibenreinigungsanlage kann Reinigungsdüsen, eine Pumpe und einen Tank aufweisen. Die Reinigungsdüsen sind auf die Windschutzscheibe gerichtet und können von der Pumpe mit einer Reinigungsflüssigkeit aus dem Tank versorgt werden. Für den Tank muss Bauraum vorgehalten werden. Zudem ist ein einfacher Zugang zu dem Tank zu dessen Befüllung vorteilhaft.

Herkömmliche Halterungen für höhenverstellbare Dachspoiler sind bspw. aus der EP 2 020 366 A2 und der EP 1 055 589 A2 bekannt.

Zum Stand der Technik wird ferner auf die DE 10 2014 017 732 A1 hingewiesen, die eine Zugmaschine mit zwei seitlichen Windabweisern und dazwischenliegendem Fluidtank, vorzugsweise Reduktionsmitteltank, offenbart.

Aus der US 4,904,015 A sind eine Zugmaschine und ein Anhänger bekannt, die in einer Tandem-Zugbeziehung miteinander gekoppelt sind. An der Zugmaschine ist dabei ein Luftabweisersystem angebracht, um den Luftwiderstand einer solchen Kombination aerodynamisch zu verringern, indem ein Raum zwischen einer Kabine der Zugmaschine und dem Anhänger umschlossen wird. Eine Halterung ist an einer Stützeinrichtung der Zugmaschine befestigt. Eine obere Luftverkleidung ist beweglich an der Stützeinrichtung angebracht und erstreckt sich von der Oberseite der Kabine bis zur Oberseite des Anhängers. Zwei seitliche Verkleidungen sind beweglich an der Stützeinrichtung befestigt und erstrecken sich von der Rückseite der Kabine zum Anhänger, wobei die seitlichen Verkleidungen mit der oberen Verkleidung zusammenpassen. Es ist ein Mittel vorgesehen, um die Verkleidungen je nach der Ausrichtung zwischen dem Anhänger und der Zugmaschine von einer Position in eine andere zu bewegen.

Die WO 2007/090172 A2 offenbart eine Luftabschirmung, die eine Seitenwandanordnung in gelenkiger Verbindung mit jeder hinteren Kante einer Seitenwand einer Zugmaschine und eine Betätigungsbaugruppe umfasst. Die Betätigungsbaugruppe umfasst eine Nabe in Dreheingriff mit dem Rahmen der Zugmaschine, wobei die Nabe zwischen einer Kabine und einem fünften Rad der Zugmaschine angeordnet ist. Die Betätigungsbaugruppe umfasst ferner einen Hebel mit einer einstellbaren Länge, der an einem ersten Ende mit der Nabe und an einem zweiten Ende mit der Seitenwandanordnung in Eingriff steht. Die Betätigungsbaugruppe umfasst zudem eine Feder mit einem ersten Ende, das mit der Seitenwandanordnung verbunden ist, und einem zweiten Ende, das mit dem Rahmen der Zugmaschine zwischen der Nabe und der Rückseite eines Anhängerrahmens verbunden ist.

Die US 4,779,915 A offenbart ein Luftfoliensystem zur abnehmbaren, einstellbaren Montage an einem Rahmen einer Zugmaschine hinter dem Fahrerhaus zur Verringerung des Luftwiderstands, dem ein von der Zugmaschine gezogener Anhänger ausgesetzt ist. Das Luftfoliensystem umfasst ein aufrechtes Stützelement, das an seiner Basis Befestigungsmittel enthält, die so beschaffen sind, dass sie das Stützelement abnehmbar an dem Rahmen der Zugmaschine hinter dem Fahrerhaus befestigen, wobei das Stützelement eine Querabmessung hat, die ungefähr der Breite des Fahrerhauses entspricht. Das Luftfoliensystem umfasst ferner eine Luftfolie, die verstellbar oben auf dem Stützelement angebracht ist, wobei die Luftfolie so beschaffen ist, dass sie sich über das Fahrerhaus erstreckt. Das Luftfoliensystem umfasst zudem eine verstellbare Seitenwand, die an jedem Ende des Stützelements angebracht ist, wobei sich jede Seitenwand von der Oberseite des Stützelements nach unten in Richtung der Basis erstreckt. Jede Seitenwand hat eine Höhe, die größer als ihre Breite ist.

Die US 6,428,084 B1 offenbart ein kraftstoffsparendes Zugmaschinen-Anhänger-System zur Verbesserung des Kraftstoffverbrauchs einer Zugmaschinen-Anhänger-Kombination durch Verbesserung des Luftwiderstandes, der in dem Bereich zwischen dem Heck der Zugmaschine und der Vorderseite des Anhängers auftritt. Das kraftstoffsparende Zugmaschinen-Anhänger-System verfügt über eine verbesserte Dachverlängerung, die sich automatisch anhebt, wenn die Zugmaschine in den Rückwärtsgang geschaltet wird, sowie über einen verbesserten Radmechanismus, der das Gleiten der Seitenverlängerungen um die Enden des Anhängers unterstützt, wenn die Zugmaschine mit dem Anhängers wendet.

Der Erfindung liegt die Aufgabe zu Grunde, ein alternatives und/oder verbessertes Kraftfahrzeug mit einem Dachspoiler, und vorzugsweise zusätzlich mit einer Scheibenreinigungsanlage, zu schaffen.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem Aspekt ist ein Kraftfahrzeug, vorzugsweise Nutzfahrzeug (z. B. Lastkraftwagen), offenbart. Das Kraftfahrzeug weist eine Karosserie und eine Außenseitenblende, die an einer Längsaußenseite des Kraftfahrzeugs angeordnet und zwischen einer Schließstellung und einer Öffnungsstellung bewegbar, vorzugsweise verschwenkbar, mit der Karosserie (z. B. direkt oder indirekt) verbunden ist, auf. Das Kraftfahrzeug weist einen (z. B. schwenkbarer) Dachspoiler und eine (z. B. manuelle) Verstelleinrichtung, mittels der der Dachspoiler höhenverstellbar ist, auf. Die Verstelleinrichtung ist in der Schließstellung der Außenseitenblende verdeckt hinter der Außenseitenblende angeordnet. Die Verstelleinrichtung ist in der Öffnungsstellung der Außenseitenblende von außen zugänglich.

Vorteilhaft ist die Verstelleinrichtung so besonders einfach zugänglich. Andererseits ist die Verstelleinrichtung geschützt und optisch ansprechend hinter der Außenseitenblende angeordnet.

Erfindungsgemäß weist die Karosserie eine Längsseitenwand auf, und die Verstelleinrichtung ist an der Längsseitenwand angeordnet und/oder befestigt. Vorzugsweise kann die Längsseitenwand parallel zu einer Längsachse des Kraftfahrzeugs ausgerichtet sein und/oder in der Schließstellung der Außenseitenblende von der Außenseitenblende verdeckt und in der Öffnungsstellung der Außenseitenblende von außen zugänglich sein.

In einem weiteren Ausführungsbeispiel weist die Verstelleinrichtung eine (z. B. vertikal ausgerichtete) Schiene auf, mittels der der Dachspoiler höhenverstellbar ist. Vorzugsweise kann die Schiene als ein Langloch ausgebildet sein und/oder mehrere übereinander angeordnete (z. B. zackenförmige, krallenförmige oder zahnförmige) Vorsprünge aufweisen, an denen der Dachspoiler mittelbar (z. B. mittels eines länglichen Verbindungselements) lösbar anbringbar ist, bevorzugt mittels einer Schraubverbindung.

In einem weiteren Ausführungsbeispiel weist das Kraftfahrzeug ferner ein längliches (z. B. stangenförmiges, rohrförmiges oder balkenförmiges) Verbindungselement auf, das den Dachspoiler höhenverstellbar mit der Verstelleinrichtung verbindet und vorzugsweise verschwenkbar mit dem Dachspoiler verbunden ist. Optional kann das Kraftfahrzeug ferner ein Verkleidungsteil aufweisen, das zwischen dem Dachspoiler und der Außenseitenblende angeordnet ist, wobei das längliche Verbindungselement zumindest abschnittsweise verdeckt hinter dem Verkleidungsteil angeordnet ist. Damit kann der gesamte Verstellmechanismus für den Dachspoiler von außen uneinsichtig, geschützt und die Aerodynamik des Kraftfahrzeugs nicht negativ beeinflussend angeordnet sein.

In einer Ausführungsform weist die Karosserie ein Dach mit einer Vertiefung (z. B. Dachgraben) auf, und eine Vorderkante des Dachspoilers taucht bei einem Höherverstellen des Dachspoilers in die Vertiefung ein, z. B. zunehmend. Damit kann eine verbesserte Anströmung des Dachspoilers erreicht werden.

In einer Ausführungsform ist der Dachspoiler zur Montage oder Demontage mittels der Verstelleinrichtung in eine im Wesentlichen senkrechte Ausrichtung verstellbar. Dies kann bspw. eine (De-) Montage erlauben, ohne dass bspw. ein Ladeaufbau des Kraftfahrzeugs demontiert werden muss.

In einer Weiterbildung erstreckt sich die Vertiefung über eine gesamte Breite des Dachs. Vorzugsweise kann eine Bodenfläche der Vertiefung gebogen, gekrümmt und/oder zu beiden Längsaußenseiten des Kraftfahrzeugs hin abfallend sein (bzw. ein Gefälle aufweisen). Damit kann Wasser einfach abfließen und bleibt nicht auf dem Dach stehen.

In einer Ausführungsform weist das Kraftfahrzeug ferner eine Scheibenreinigungsanlage (z. B. mit einer Reinigungsdüse für eine Windschutzscheibe und/oder eine Scheibe eines Scheinwerfers) mit einem Reinigungsflüssigkeitstank und einem Einfüllstutzen zum Befüllen des Reinigungsflüssigkeitstanks auf. Der Einfüllstutzen ist in der Schließstellung der Außenseitenblende verdeckt hinter der Außenseitenblende angeordnet und der Einfüllstutzen ist in der Öffnungsstellung der Außenseitenblende von außen zugänglich. Damit kann der Einfüllstutzen von außen uneinsichtig, geschützt und die Aerodynamik des Kraftfahrzeugs nicht negativ beeinflussend angeordnet sein. Hinter der Außenseitenblende können somit mehrere Funktionen verborgen sein. Zusätzlich ergeben sich neue Möglichkeiten für die Anordnung des Reinigungsflüssigkeitstanks.

In einer Weiterbildung ist der Einfüllstutzen an der Längsseitenwand angeordnet und/oder befestigt, vorzugsweise in einer Öffnung der Längsseitenwand, bevorzugt unterhalb der Verstelleinrichtung.

In einer weiteren Ausführungsform ist der Reinigungsflüssigkeitstank von unterhalb des Kraftfahrzeugs zugänglich und/oder montierbar (z. B. einbaubar, ausbaubar, wechselbar). Damit kann die Montage und ggf. einen Austausch des Reinigungsflüssigkeitstanks vereinfacht werden.

In einer Ausführungsvariante ist der Reinigungsflüssigkeitstank zumindest teilweise in einem Abschnitt zwischen einem Innenkotflügel des Kraftfahrzeugs und einem Außenkotflügel des Kraftfahrzeugs angeordnet. Alternativ oder zusätzlich ist der Reinigungsflüssigkeitstank bezüglich einer Vorwärtsfahrrichtung des Kraftfahrzeugs hinter einer Tür des Kraftfahrzeugs angeordnet. Alternativ oder zusätzlich ist der Reinigungsflüssigkeitstank innen an bzw. von einer Rückwand der Karosserie angeordnet. Somit kann der Reinigungsflüssigkeitstank auf vorteilhafte Weise in einem zuvor ungenutzten Raum der Karosserie angeordnet sein.

In einer weiteren Ausführungsvariante weist das Kraftfahrzeug ferner mindestens ein Werkzeug (z. B. Abschleppöse, Wischstange, Radmutternschlüssel, Wagenheber), mindestens einen Behälter und/oder mindestens ein Staufach auf, das bzw. der in der Schließstellung der Außenseitenblende von der Außenseitenblende verdeckt ist und in der Öffnungsstellung der Außenseitenblende von außen zugänglich ist.

In einem Ausführungsbeispiel ist die Außenseitenblende mittels eines innerhalb der Karosserie zugänglichen Bowdenzugs aus der Schließstellung entriegelbar und/oder bewegbar.

In einem weiteren Ausführungsbeispiel ist die Karosserie als eine Fahrerhauskarosserie eines Lastkraftwagens ausgeführt.

In einer Ausführungsform ist die Außenseitenblende als ein Sideflap ausgeführt.

In einer weiteren Ausführungsform ist die Außenseitenblende in einer Schließstellung schräg nach außen angewinkelt zu einer Längsachse des Kraftfahrzeugs angeordnet, sodass vorzugsweise eine Hinterkante der Außenseitenblende mit einer Seitenwand eines Ladeaufbaus eines Anhängers oder eines Aufliegers des Kraftfahrzeugs ausgerichtet ist, bevorzugt im Wesentlichen bündig.

In einer Ausführungsvariante ist die Außenseitenblende oberhalb von einem Außenkotflügel und/oder einer Vorderachse des Kraftfahrzeugs angeordnet.

In einer weiteren Ausführungsvariante erstreckt sich die Außenseitenblende zwischen einem Außenkotflügel des Kraftfahrzeugs und einem Dach des Kraftfahrzeugs.

In einem Ausführungsbeispiel ist die Außenseitenblende bezüglich einer Vorwärtsfahrtrichtung des Kraftfahrzeugs von der Schließstellung nach hinten in die Öffnungsstellung schwenkbar.

In einem weiteren Ausführungsbeispiel weist die Außenseitenblende bezüglich einer Vorwärtsfahrtrichtung des Kraftfahrzeugs eine gerade Hinterkante und eine zumindest abschnittsweise gekrümmte Vorderkante auf.

In einem weiteren Ausführungsbeispiel weist das Kraftfahrzeug eine Tür (z. B. Fahrertür oder Beifahrertür) auf, die bewegbar mit der Karosserie verbunden ist. Die Außenseitenblende ist bezüglich einer Vorwärtsfahrtrichtung des Kraftfahrzeugs hinter der Tür angeordnet.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht eines vorderen Abschnitts eines beispielhaften Kraftfahrzeugs;
- Figur 2: eine weitere Seitenansicht des vorderen Abschnitts des beispielhaften Kraftfahrzeugs mit einer aufgeschwenkten Außenseitenblende;
- Figur 3: eine Detailansicht eines Details A aus Figur 2;
- Figur 4: eine Horizontalschnittansicht durch die Außenseitenblende des Kraftfahrzeugs auf Höhe eines unteren Scharniers, wobei die Außenseitenblende in einer Öffnungsstellung und einer Schließstellung dargestellt ist;
- Figur 5: eine weitere Horizontalschnittansicht durch die Außenseitenblende des beispielhaften Kraftfahrzeugs auf Höhe einer Verriegelungseinrichtung, wobei die Außenseitenblende in einer Öffnungsstellung und einer Schließstellung dargestellt ist;
- Figur 6: eine Rückansicht einer Fahrerseite des beispielhaften Kraftfahrzeugs;
- Figur 7: eine weitere Rückansicht der Fahrerseite des beispielhaften Kraftfahrzeugs ohne Darstellung eines Wandelements einer Rückwand des Kraftfahrzeugs;
- Figur 8: eine weitere Rückansicht der Fahrerseite des beispielhaften Kraftfahrzeugs mit einer schematischen Illustration einer (De-)Montage eines Reinigungsflüssigkeitsbehälters einer Scheibenwaschanlage des beispielhaften Kraftfahrzeugs;
- Figur 9: eine Vertikalschnittansicht entlang einer Längsachse des beispielhaften Kraftfahrzeugs durch einen höhenverstellbaren Dachspoiler des Kraftfahrzeugs, wobei der Dachspoiler in drei unterschiedlichen Höheneinstellungen dargestellt ist; und
- Figur 10: eine perspektivische Rückansicht auf ein Dach des beispielhaften Kraftfahrzeugs ohne Darstellung eines Dachspoilers des Kraftfahrzeugs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

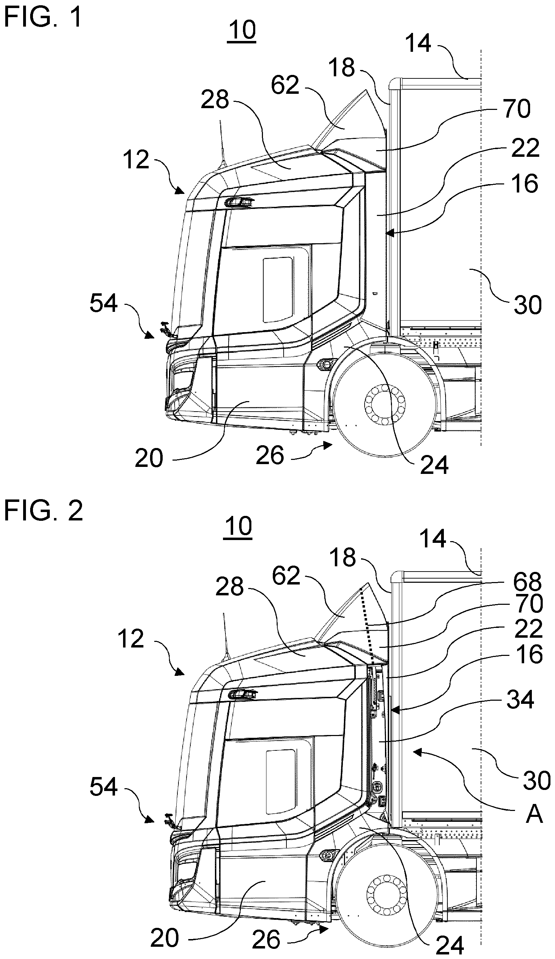

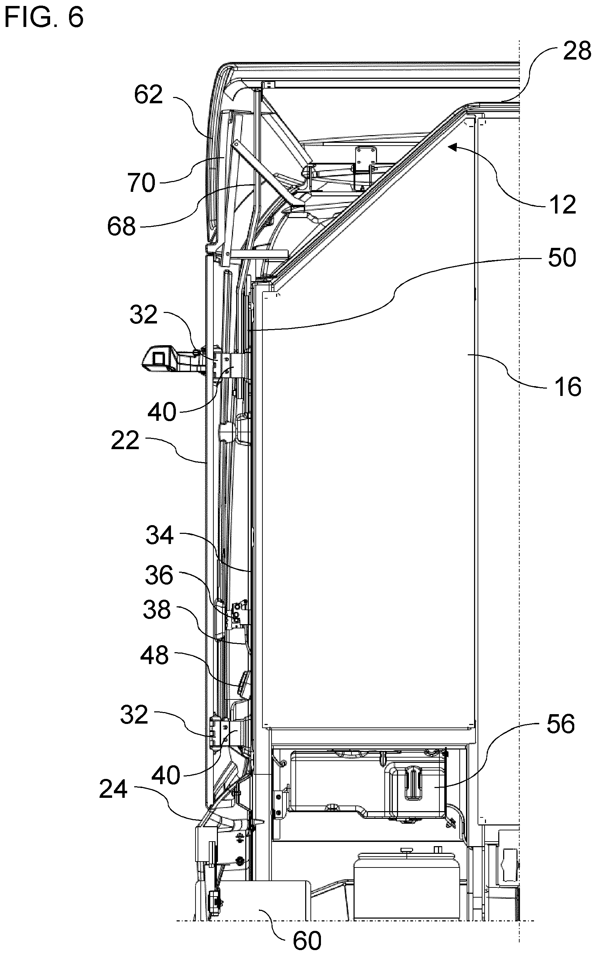

Die Figuren 1 bis 10 zeigen unterschiedliche Ansichten unterschiedlicher Abschnitte eines vorzugsweise als Lastkraftwagen ausgeführten Kraftfahrzeugs 10. Es versteht sich, dass hierin offenbarten Techniken auch bei anders ausgeführten Kraftfahrzeugen oder Nutzfahrzeugen verwendet werden können.

Wie insbesondere die Figuren 1 und 2 zeigen, weist das Kraftfahrzeug 10 eine Karosserie 12 auf. Vorzugsweise ist die Karosserie 12 als eine Fahrerhauskarosserie eines Fahrerhauses des Kraftfahrzeugs 10 ausgeführt. Die Karosserie 12 kann an einem Fahrzeugrahmen, zum Beispiel einen Leiterrahmen, abgestützt sein.

Das Kraftfahrzeug 10 kann einen Ladeaufbau 14 zum Transportieren von Gütern aufweisen. Der Ladeaufbau 14 ist hinter der Karosserie 12 angeordnet. Der Ladeaufbau 14 kann eine Vorderwand 18 aufweisen, die direkt an eine Rückwand 16 der Karosserie 12 angrenzt. Es ist auch möglich, dass die Vorderwand 18 des Ladeaufbaus 14 beabstandet zu der Rückwand 16 der Karosserie 12 ist. Der Ladeaufbau 14 kann auf dem Fahrzeugrahmen abgestützt sein. Es ist beispielsweise auch möglich, dass das Kraftfahrzeug 10 alternativ zu dem Ladeaufbau 14 einen gezogenen Anhänger oder Sattelauflieger aufweist, dessen Vorderwand zweckmäßig beabstandet zu der Rückwand 16 angeordnet ist.

Das Kraftfahrzeug 10 weist mindestens eine Tür 20 auf. Die Tür 20 gewährt Zugang zu einem Innenraum des Kraftfahrzeugs 10. Die mindestens eine Tür 20 umfasst zweckmäßig eine Fahrertür auf einer Fahrerseite des Kraftfahrzeugs 10 und eine Beifahrertür auf einer Beifahrerseite des Kraftfahrzeugs 10. Die Tür 20 ist bewegbar, vorzugsweise verschwenkbar, mit der Karosserie 12 zum Öffnen der Tür 20 verbunden.

Das Kraftfahrzeug 10 weist mindestens eine Außenseitenblende 22 auf. Die Außenseitenblende 22 ist als eine längliche Blende ausgeführt. Eine Längsachse der Außenseitenblende 22 verläuft zweckmäßig parallel zu einer Vertikalachse/Hochachse des Kraftfahrzeugs 10. Bevorzugt ist die Außenseitenblende 22 bezüglich der Vorwärtsfahrtrichtung des Kraftfahrzeugs 10 hinter der Tür 20 angeordnet. Die Außenseitenblende 22 ist oberhalb von einem Außenkotflügel 24 einer Vorderachse 26 des Kraftfahrzeugs 10 angeordnet. Im Einzelnen kann sich die Außenseitenblende 22 zwischen dem Außenkotflügel 24 und einem Dach 28 des Kraftfahrzeugs 10 erstrecken. Eine weitere Außenseitenblende 22 kann auf der gegenüberliegenden Fahrzeugseite, zum Beispiel der Beifahrerseite, entsprechend angeordnet und ausgebildet sein.

Die Außenseitenblende 22 ist beweglich mit der Karosserie 12 verbunden, unmittelbar oder mittelbar. Vorzugsweise ist die Außenseitenblende 22 verschwenkbar mit der Karosserie 12 verbunden. Die Außenseitenblende 22 kann zwischen einer Schließstellung, z. B. Einschwenkstellung, und einer Öffnungsstellung, z. B. Ausschwenkstellung, bewegt werden. Die Figuren 1, 4 bis 9 und 10 zeigen die Außenseitenblende 22 in der Schließstellung. Die Figuren 2 bis 5 zeigen die Außenseitenblende 22 in der Öffnungsstellung. Die Bewegung der Außenseitenblende 22 kann zweckmäßig manuell bewirkt werden. Vorzugsweise kann hierfür ein Griff, zum Beispiel in Form einer Griffmulde, in einer Außenseite der Außenseitenblende 22 integriert sein.

Die Außenseitenblende 22 ist zweckmäßig als ein sogenannter Sideflap ausgeführt. Eine Aufgabe der Außenseitenblende 22 besteht somit insbesondere in der verbesserten Aerodynamik des Kraftfahrzeugs 10, wobei insbesondere die Umströmung des Kraftfahrzeugs 10 beim Übergang zum Ladeaufbau 14 (oder Anhänger oder Auflieger) verbessert wird. Zweckmäßig kann die Außenseitenblende 22 daher in der Schließstellung schräg nach außen angewinkelt zu einer Längsachse des Kraftfahrzeugs 10 angeordnet sein. Eine Hinterkante der Außenseitenblende 22 kann so mit einer Vorderkante einer Seitenwand 30 des Ladeaufbaus 14 ausgerichtet sein, vorzugsweise bündig. Damit kann der Übergang zwischen dem schmaleren Fahrerhaus und den breiteren Ladeaufbau 14 aerodynamisch verbessert werden. In Ausführungsformen, in denen beispielsweise der Ladeaufbau 14 beabstandet zu der Karosserie 12 ist oder ein Anhänger oder ein Sattelauflieger von dem Kraftfahrzeug 10 gezogen wird, kann die als Sideflap ausgeführte Außenseitenblende 22 zusätzlich oder alternativ einen Abstand zwischen der Rückwand 16 der (Fahrerhaus-) Karosserie 12 und der Vorderwand 18 des Ladeaufbaus 14, des Anhängers oder Sattelaufliegers zumindest teilweise, vorzugsweise im Wesentlichen vollständig, überbrücken. Die Außenseitenblende 22 kann daher entgegen einer Vorwärtsfahrtrichtung des Kraftfahrzeugs 10 über die Rückwand 16 überstehen oder hinter der Rückwand 16 angeordnet sein.

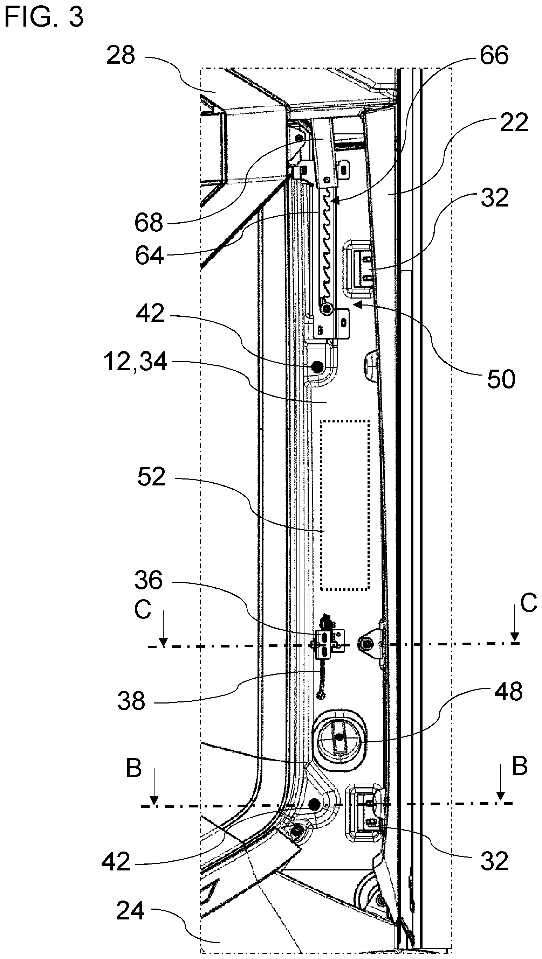

Die Figur 3, die das Detail A aus Figur 2 vergrößert abbildet, zeigt die Außenseitenblende 22 in der Öffnungsstellung.

Im dargestellten Ausführungsbeispiel ist die Außenseitenblende 22 mittels zweier Scharniere 32 schwenkbar mit einer äußeren Längsseitenwand 34 der Karosserie 12 verbunden. Die Außenseitenblende 22 ist mittels einer Verriegelungseinrichtung 36 in der Schließstellung verriegelbar. Die Verriegelungseinrichtung 36 kann zweckmäßig mittels eines Bowdenzugs 38 zum Freigeben der Außenseitenblende 22 entriegelt werden. Bevorzugt ist der Bowdenzug 38 von innerhalb des Kraftfahrzeugs 10 betätigbar. Die Außenseitenblende 22 auf der anderen Fahrzeugseite (z. B. Beifahrerseite) kann vorzugsweise mit einem anderen, einfacheren Mechanismus entriegelt werden.

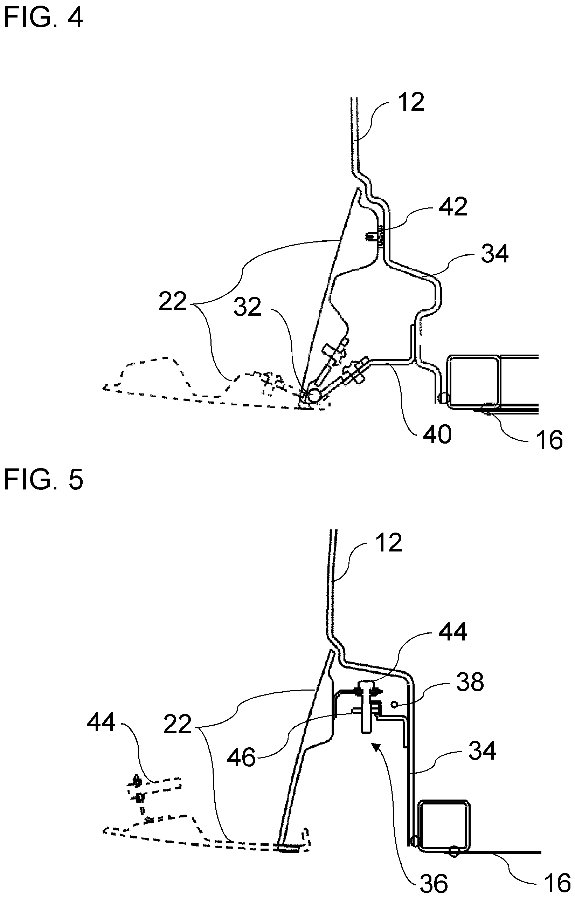

Die Figur 4 zeigt eine schematische Horizontalschnittansicht entlang einer Linie B-B aus Figur 3 durch eines der Scharniere 32. Die Figur 4 zeigt die Außenseitenblende 22 in der Öffnungsstellung mit einer gestrichelten Linie und in der Schließstellung mit einer durchgezogenen Linie.

Das Scharnier 32 ist einerseits an einer Innenseite der Außenseitenblende 22 angebracht. Andererseits ist das Scharnier 32 an der Längsseitenwand 34 der Karosserie 12 angebracht, zum Beispiel mittels eines Haltewinkels 40. Bevorzugt ist die Außenseitenblende 22 lösbar an der Längsseitenwand 34 angebracht, zum Beispiel mittels mindestens einer Schraubverbindung.

Das Scharnier 32 ist an einer Hinterkante der Außenseitenblende 22 angeordnet. Damit kann die Außenseitenblende 22 aus der Schließstellung entgegen der Vorwärtsfahrtrichtung des Kraftfahrzeugs 10 nach hinten in die Öffnungsstellung verschwenkt werden. Eine derartige Anbindung kann dadurch bevorzugt sein, dass eine Vorderkante der Außenseitenblende 22 zumindest abschnittsweise gekrümmt ist, die Hinterkante der Außenseitenblende 22 hingegen gradlinig ausgeführt ist.

In der Schließstellung kann die Außenseitenblende 22 zusätzlich an der Längsseitenwand 34 durch mindestens ein Halteelement 42, vorzugsweise gedämpft, abgestützt und/oder zentriert sein. Das Halteelement 42 kann beispielsweise stiftförmig oder tropfenförmig sein und in eine entsprechende Öffnung in der Außenseitenblende 22 eingreifen, wie in Figur 4 dargestellt ist. Das Halteelement 42 hält die Außenseitenblende 22 bezüglich der Vorwärtsfahrtrichtung des Kraftfahrzeugs 10 an einem vorderen Abschnitt. Es ist möglich, dass das Halteelemente 42 starr oder elastisch ausgebildet ist und/oder starr oder elastisch an der Längsseitenwand 34 gelagert ist. Vorzugsweise gewährleisten die Halteelemente 42 einen sicheren Halt der Außenseitenblende 22 während des Betriebs des Kraftfahrzeugs 10 und/oder entlasten die Scharniere 32.

Die Figur 5 zeigt eine schematische Horizontalschnittansicht entlang einer Linie C-C aus Figur 3 durch die Verriegelungseinrichtung 36. Die Figur 5 zeigt die Außenseitenblende 22 in der Öffnungsstellung mit einer gestrichelten Linie und in der Schließstellung mit einer durchgezogenen Linie.

Die Verriegelungseinrichtung 36 kann ein beispielsweise bolzenförmiges Verriegelungselement 44 und eine Aufnahme bzw. Falle 46 für das Verriegelungselement 44 aufweisen. Das Verriegelungselement 44 ist an einer Innenseite der Außenseitenblende 22 angebracht. Die Falle 46 ist an der Längsseitenwand 34 angebracht. Die Falle 46 kann mittels des Bowdenzugs 38 (siehe auch Figur 3) entriegelt werden.

Es wird erneut auf die Figur 3 Bezug genommen. Eine Besonderheit der Außenseitenblende 22 besteht darin, dass hinter der Außenseitenblende 22 unterschiedliche Funktionsbauteile verborgen werden können, wenn die Außenseitenblende 22 in der Schließstellung ist, und von außen her zugänglich sein können, wenn die Außenseitenblende 22 geöffnet ist.

Beispielsweise kann ein Einfüllstutzen 48 hinter der Außenseitenblende 22 angeordnet sein. Der Einfüllstutzen 48 kann in einer (Durchgangs-)Öffnung der Längsseitenwand 34 angebracht sein. Der Einfüllstutzen 48 kann mittels eines lösbaren Deckels verschließbar sein. Es ist auch möglich, dass eine Verstelleinrichtung 50 hinter der Außenseitenblende 22 angeordnet und an der Längsseitenwand 34 angebracht ist. Es ist ebenfalls möglich, dass alternativ oder zusätzlich mindestens eine andere Komponente 52 hinter der Außenseitenblende 22 angeordnet und beispielsweise an der Längsseitenwand 34 angebracht ist, wie schematisch in Figur 3 angedeutet ist. Die Komponente 52 kann beispielsweise als ein Werkzeug (z. B. Abschleppöse, Wischstange, Radmutternschlüssel, Wagenheber), ein Behälter oder ein Staufach ausgeführt sein.

Unter Bezugnahme auf den genannten Einfüllstutzen 48 ist nachfolgend auf die Figuren 1 bis 3 und 6 bis 8 Bezug genommen.

Das Kraftfahrzeug 10 kann eine Scheibenreinigungsanlage 54 aufweisen. Die Scheibenreinigungsanlage 54 kann mindestens eine Reinigungsdüse aufweisen, die zum Versprühen einer Reinigungsflüssigkeit auf eine Windschutzscheibe des Kraftfahrzeugs und/oder eine Scheibe eines Scheinwerfers des Kraftfahrzeugs 10 angeordnet ist. Die Scheibenreinigungsanlage 54 weist ferner eine Pumpe (nicht dargestellt), einen Reinigungsflüssigkeitstank 56 und den Einfüllstutzen 48 auf. Der Einfüllstutzen 48 ist über eine Leitung 58, zum Beispiel Rohrleitung oder Schlauchleitung, mit dem Reinigungsflüssigkeitstank verbunden. Die Pumpe kann eine Reinigungsflüssigkeit aus dem Reinigungsflüssigkeitstank 56 absaugen und zu der mindestens einen Reinigungsdüse der Scheibenreinigungsanlage 54 zuführen.

Eine derartige Anordnung des Einfüllstutzens 48 bietet den Vorteil einer leichten Zugänglichkeit. Zusätzlich kann der Reinigungsflüssigkeitstank 56 in einem zuvor ungenutzten Raum sicher innerhalb der Karosserie 12 angeordnet werden. Der Reinigungsflüssigkeitstank 56 ist zumindest teilweise in einem Abschnitt zwischen einem Innenkotflügel 60 des Kraftfahrzeugs 10 und dem Außenkotflügel 24 des Kraftfahrzeugs angeordnet. Der Reinigungsflüssigkeitstank 56 ist bezüglich der Vorwärtsfahrrichtung der Kraftfahrzeugs10 hinter der Tür 20 angeordnet, vorzugsweise innen an der Rückwand 16 der Karosserie 12.

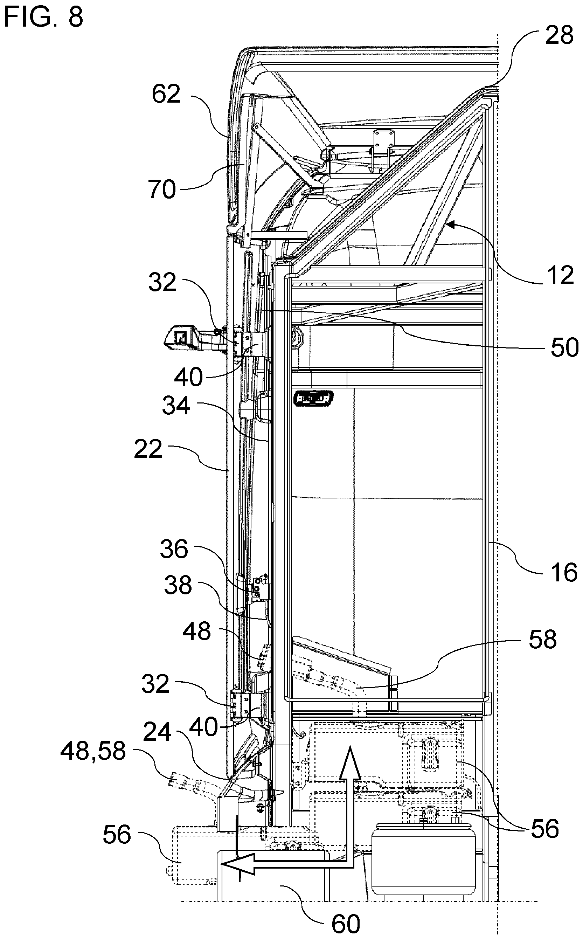

Diese Anordnung des Reinigungsflüssigkeitstanks 56 kann den weiteren Vorteil einer einfachen Montage und Demontage (zum Beispiel in einem Reparaturfall) des Reinigungsflüssigkeitstanks 56 ermöglichen. Hierzu wird auf die Figur 8 verwiesen, die darstellt, wie der Reinigungsflüssigkeitstank 56, vorzugsweise zusammen mit dem Einfüllstutzen 48 und der Leitung 58 von unterhalb des Kraftfahrzeugs 10 an die gewünschte Montageposition führbar oder aus dieser entfernbar ist (vgl. Doppelpfeil in Figur 8). Der Reinigungsflüssigkeitstank 56 ist damit von unterhalb des Kraftfahrzeugs 10 zugänglich und montierbar. Die Anordnung des Reinigungsflüssigkeitstanks 56 bietet ferner den Vorteil, dass bei einer Leckage die Reinigungsflüssigkeit nicht über sensible Bauteile nach unten abfließt, sondern direkt auf den Untergrund tropfen kann.

Unter Bezugnahme auf die genannte Verstelleinrichtung 50 ist nachfolgend auf die Figuren 1 bis 3 und 6 bis 9 Bezug genommen.

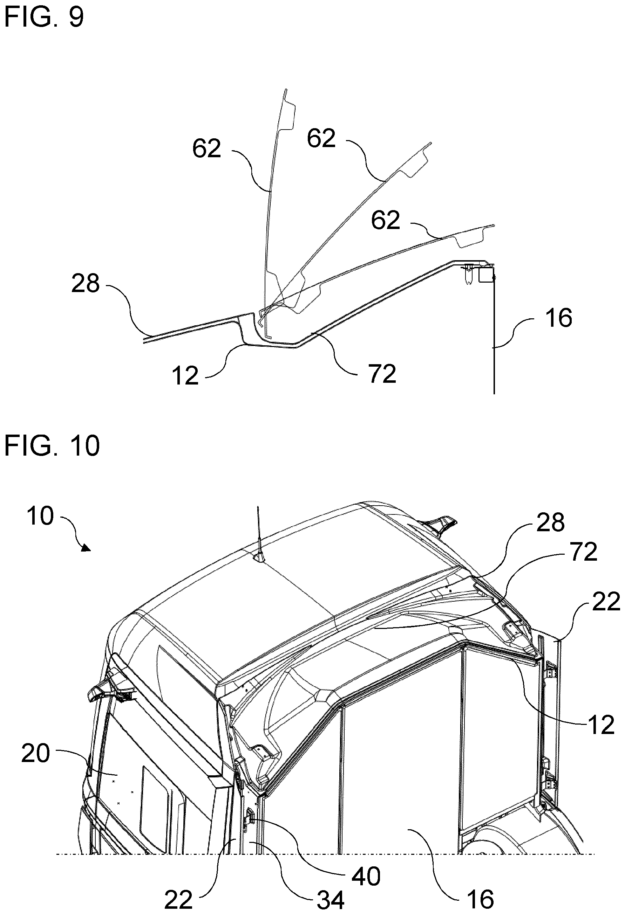

Das Kraftfahrzeug 10 kann einen höhenverstellbaren Dachspoiler 62 aufweisen. Die Figur 9 zeigt beispielhafte Höheneinstellungen des Dachspoilers 62. Die steilste Ausrichtung des Dachspoilers 62 kann bspw. bei einer Montage oder Demontage des Dachspoilers am Dach 28 verwendet werden. Die Montage und die Demontage (z. B. bei einem Schaden) des Dachspoilers 62 kann so erfolgen, ohne dass eine Demontage des ggf. vorhandenen Ladeaufbaus 14 erforderlich ist. Steilste Ausrichtung kann bspw. eine senkrechte oder annähernd senkrechte Ausrichtung des Dachspoilers 62 sein.

Der Dachspoiler 62 ist auf dem Dach 28 angeordnet. Der Dachspoiler 62 kann im Bereich seiner Vorderkante schwenkbar an dem Dach 28 angebracht sein. Mittels der Verstelleinrichtung 50 kann eine Höhenverstellung des Dachspoilers 62 vorgenommen werden. Durch die Anordnung der Verstelleinrichtung 50 hinter der Außenseitenblende 22 kann eine gute Zugänglichkeit der Verstelleinrichtung 50 gewährleistet werden, wenn die Außenseitenblende 22 in die Öffnungsstellung bewegt wird. Es kann auf beiden Längsaußenseiten des Kraftfahrzeugs 10 jeweils eine Verstelleinrichtung 50 hinter einer entsprechenden Außenseitenblende 22 angeordnet sein.

Die Verstelleinrichtung 50 kann eine Schiene 64 aufweisen. Die Schiene 64 ist als Langloch ausgeführt. Die Schiene 64 ist vertikal ausgerichtet. Eine Längskante des Langlochs kann mehrere übereinander angeordnete Vorsprünge 66 aufweisen. Die Vorsprünge 66 können unterschiedlich mögliche Höheneinstellungen des Dachspoilers 62 ermöglichen. Die Vorsprünge 66 können beispielsweise als Zacken, Krallen oder Zähne ausgeführt sein.

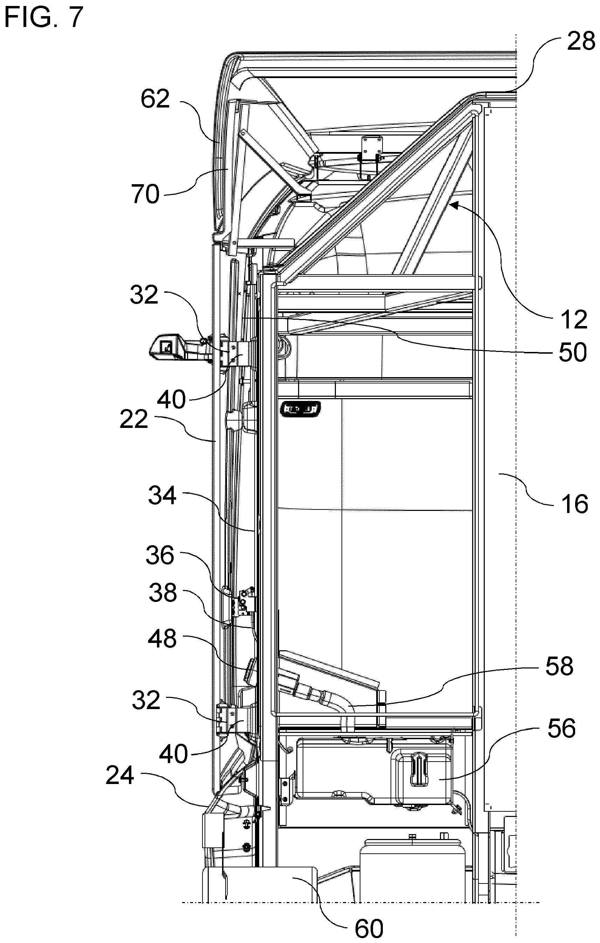

Ein längliches Verbindungselement 68 (ausgeblendet in Figuren 7 und 8) kann, z. B. mittels einer Schraubverbindung, an einem gewünschten Vorsprung 66 der Vorsprünge 66 lösbar angebracht werden. Das Verbindungselement 68 verbindet die Verstelleinrichtung 50 mit dem Dachspoiler 62. Beispielsweise kann das Verbindungselement 68 schwenkbar an einer Innenseite des Dachspoilers 62 angebracht sein. Das Verbindungselement 68 ist bevorzugt als Stange, Rohr oder Balken ausgeführt.

Das Kraftfahrzeug 10 kann zudem ein Verkleidungsteil 70 aufweisen. Das Verkleidungsteil 70 kann zwischen dem Dachspoiler 62 und der Außenseitenblende 22 angeordnet sein und bspw. einen Spalt zwischen einer Unterkante des Dachspoilers 62 und dem Dach 28 überbrücken. Der Spalt kann in Abhängigkeit von einer Höheneinstellung des Dachspoilers 62 vorhanden sein. Das Verbindungselement 68 kann hinter dem Verkleidungsteil 70 angeordnet sein. Damit ist der gesamte Mechanismus zur Höhenverstellung des Dachspoilers optisch ansprechend und vor Witterungseinflüssen geschützt von außen nicht sichtbar angeordnet. Erst beim Bewegen der Außenseitenblende 22 in die Öffnungsstellung wird die Verstelleinrichtung 50 und ein unterer Abschnitt des Verbindungselements 68 sichtbar und zugängig.

Die Figuren 9 und 10 zeigen das Dach 28 des Kraftfahrzeugs 10.

Das Dach 28 weist einen Dachgraben bzw. eine Vertiefung 72 auf. Die Vertiefung 72 kann sich über eine gesamte Breite des Dachspoilers 62 bzw. des Dachs 28 erstrecken. Die Vertiefung 72 dient zur teilweisen Aufnahme des Dachspoilers 62 und kann zudem dessen Verschwenkbarkeit für die Höhenverstellung ermöglichen. Eine Vorderkante des Dachspoilers 62 taucht bei zunehmender Schrägstellung des Dachspoilers 62 immer tiefer in die Vertiefung 72 ein. Dadurch kann eine gleichmäßige und unterbrechungsfreie Anströmung des Dachspoilers 62 im Betrieb erreicht werden.

Die Vertiefung 72 kann eine gebogene oder gekrümmte Bodenfläche aufweisen, die zu beiden Längsaußenseiten des Kraftfahrzeugs 10 hin nach unten zumindest abschnittsweise abfällt, d.h. schräg nach unten gerichtet ist. So kann verhindert werden, dass Wasser auf dem Dach 28 stehenbleibt. Stattdessen kann das Wasser einfach zu den Längsaußenseiten hin abfließen.

### Bezugszeichenliste

- 10: Kraftfahrzeug
- 12: Karosserie
- 14: Ladeaufbau
- 16: Rückwand
- 18: Vorderwand
- 20: Tür
- 22: Außenseitenblende
- 24: Außenkotflügel
- 26: Vorderachse
- 28: Dach
- 30: Seitenwand
- 32: Scharnier
- 34: Längsseitenwand
- 36: Verriegelungseinrichtung
- 38: Bowdenzug
- 40: Haltewinkel
- 42: Haltelement
- 44: Verriegelungselement
- 46: Falle
- 48: Einfüllstutzen
- 50: Verstelleinrichtung
- 52: Komponente
- 54: Scheibenreinigungsanlage
- 56: Reinigungsflüssigkeitstank
- 58: Leitung
- 60: Innenkotflügel
- 62: Dachspoiler
- 64: Schiene
- 66: Vorsprung
- 68: Verbindungselement
- 70: Verkleidungsteil
- 72: Vertiefung

## Patentansprüche

1. Kraftfahrzeug (10), vorzugsweise Nutzfahrzeug, aufweisend:
eine Karosserie (12);
eine Außenseitenblende (22), die an einer Längsaußenseite des Kraftfahrzeugs (10) angeordnet und zwischen einer Schließstellung und einer Öffnungsstellung bewegbar, vorzugsweise verschwenkbar, mit der Karosserie (12) verbunden ist;
einen Dachspoiler (62); und
eine Verstelleinrichtung (50), mittels der der Dachspoiler (62) höhenverstellbar ist, wobei die Verstelleinrichtung (50) in der Schließstellung der Außenseitenblende (22) verdeckt hinter der Außenseitenblende (22) angeordnet ist und die Verstelleinrichtung (50) in der Öffnungsstellung der Außenseitenblende (22) von außen zugänglich ist,
wobei:
die Karosserie (12) eine Längsseitenwand (34) aufweist; und
die Verstelleinrichtung (50) an der Längsseitenwand (34) angeordnet und/oder befestigt ist.

2. Kraftfahrzeug (10) nach Anspruch 1, wobei:
die Verstelleinrichtung (50) eine Schiene (64) aufweist, mittels der der Dachspoiler (62) höhenverstellbar ist, wobei vorzugsweise:
die Schiene (64) als ein Langloch ausgebildet ist; und/oder
die Schiene (64) mehrere übereinander angeordnete Vorsprünge (66) aufweist, an denen der Dachspoiler (62) mittelbar lösbar anbringbar ist, bevorzugt mittels einer Schraubverbindung.

3. Kraftfahrzeug (10) nach einem der vorherigen Ansprüche, ferner aufweisend:
ein längliches Verbindungselement (68), das den Dachspoiler (62) höhenverstellbar mit der Verstelleinrichtung (50) verbindet und vorzugsweise verschwenkbar mit dem Dachspoiler (62) verbunden ist; und
ein Verkleidungsteil (70), das zwischen dem Dachspoiler (62) und der Außenseitenblende (22) angeordnet ist, wobei das längliche Verbindungselement (68) zumindest abschnittsweise verdeckt hinter dem Verkleidungsteil (70) angeordnet ist.

4. Kraftfahrzeug (10) nach einem der vorherigen Ansprüche, wobei:
die Karosserie (12) ein Dach (28) mit einer Vertiefung (72) aufweist und eine Vorderkante des Dachspoilers (62) bei einem Höherverstellen des Dachspoilers (62) in die Vertiefung (72) eintaucht; und/oder
der Dachspoiler (62) zur Montage oder Demontage mittels der Verstelleinrichtung (50) in eine im Wesentlichen senkrechte Ausrichtung verstellbar ist.

5. Kraftfahrzeug (10) nach Anspruch 4, wobei:
die Vertiefung (72) sich über eine gesamte Breite des Dachs (28) erstreckt; und
eine Bodenfläche der Vertiefung (72) gebogen, gekrümmt und/oder zu beiden Längsaußenseiten des Kraftfahrzeugs (10) hin abfallend ist.

6. Kraftfahrzeug (10) nach einem der vorherigen Ansprüche, ferner aufweisend:
eine Scheibenreinigungsanlage (54) mit einem Reinigungsflüssigkeitstank (56) und einem Einfüllstutzen (48) zum Befüllen des Reinigungsflüssigkeitstanks (56), wobei der Einfüllstutzen (48) in der Schließstellung der Außenseitenblende (22) verdeckt hinter der Außenseitenblende (22) angeordnet ist und der Einfüllstutzen (48) in der Öffnungsstellung der Außenseitenblende (22) von außen zugänglich ist.

7. Kraftfahrzeug (10) nach Anspruch 6, wobei:
der Einfüllstutzen (48) an der Längsseitenwand (34) angeordnet und/oder befestigt ist, vorzugsweise in einer Öffnung der Längsseitenwand (34).

8. Kraftfahrzeug (10) nach Anspruch 6 oder Anspruch 7, wobei:
der Reinigungsflüssigkeitstank (56) von unterhalb des Kraftfahrzeugs (10) zugänglich und/oder montierbar ist; und/oder
der Reinigungsflüssigkeitstank (56) zumindest teilweise in einem Abschnitt zwischen einem Innenkotflügel (60) des Kraftfahrzeugs (10) und einem Außenkotflügel (24) des Kraftfahrzeugs (10) angeordnet ist; und/oder
der Reinigungsflüssigkeitstank (56) bezüglich einer Vorwärtsfahrrichtung des Kraftfahrzeugs (10) hinter einer Tür (20) des Kraftfahrzeugs (10) angeordnet ist; und/oder
der Reinigungsflüssigkeitstank (56) innen an einer Rückwand (16) der Karosserie (12) angeordnet ist.

9. Kraftfahrzeug (10) nach einem der vorherigen Ansprüche, ferner aufweisend:
mindestens ein Werkzeug (52), das in der Schließstellung der Außenseitenblende (22) von der Außenseitenblende (22) verdeckt ist und in der Öffnungsstellung der Außenseitenblende (22) von außen zugänglich ist; und/oder
mindestens einen Behälter (52), der in der Schließstellung der Außenseitenblende (22) von der Außenseitenblende (22) verdeckt ist und in der Öffnungsstellung der Außenseitenblende (22) von außen zugänglich ist; und/oder
mindestens ein Staufach (52), das in der Schließstellung der Außenseitenblende (22) von der Außenseitenblende (22) verdeckt ist und in der Öffnungsstellung der Außenseitenblende (22) von außen zugänglich ist.

10. Kraftfahrzeug (10) nach einem der vorherigen Ansprüche, wobei:
die Außenseitenblende (22) mittels eines innerhalb der Karosserie (12) zugänglichen Bowdenzugs (38) aus der Schließstellung entriegelbar und/oder bewegbar ist.

11. Kraftfahrzeug (10) nach einem der vorherigen Ansprüche, wobei:
die Karosserie (12) als eine Fahrerhauskarosserie eines Lastkraftwagens ausgeführt ist.

12. Kraftfahrzeug (10) nach einem der vorherigen Ansprüche, wobei:
die Außenseitenblende (22) als ein Sideflap ausgeführt ist; und/oder
die Außenseitenblende (22) in einer Schließstellung schräg nach außen angewinkelt zu einer Längsachse des Kraftfahrzeugs (10) angeordnet ist, sodass vorzugsweise eine Hinterkante der Außenseitenblende (22) mit einer Seitenwand (30) eines Ladeaufbaus (14), eines Anhängers oder eines Aufliegers des Kraftfahrzeugs (10) ausgerichtet ist, bevorzugt im Wesentlichen bündig.

13. Kraftfahrzeug (10) nach einem der vorherigen Ansprüche, wobei:
die Außenseitenblende (22) oberhalb von einem Außenkotflügel (24) und/oder einer Vorderachse (26) des Kraftfahrzeugs (10) angeordnet ist; und/oder
die Außenseitenblende (22) sich zwischen einem Außenkotflügel (24) des Kraftfahrzeugs (10) und einem Dach (28) des Kraftfahrzeugs (10) erstreckt.

14. Kraftfahrzeug (10) nach einem der vorherigen Ansprüche, wobei:
die Außenseitenblende (22) bezüglich einer Vorwärtsfahrtrichtung des Kraftfahrzeugs (10) von der Schließstellung nach hinten in die Öffnungsstellung schwenkbar ist; und/oder
die Außenseitenblende (22) bezüglich einer Vorwärtsfahrtrichtung des Kraftfahrzeugs (10) eine gerade Hinterkante und eine zumindest abschnittsweise gekrümmte Vorderkante aufweist; und/oder
das Kraftfahrzeug (10) eine Tür (20) aufweist, die bewegbar mit der Karosserie (12) verbunden ist, und die Außenseitenblende (22) bezüglich einer Vorwärtsfahrtrichtung des Kraftfahrzeugs (10) hinter der Tür (20) angeordnet ist.

## Claims

1. A motor vehicle (10), preferably a commercial vehicle, comprising:
a vehicle body (12);
an outer side panel (22), which is arranged at a longitudinal outer side of the motor vehicle (10) and is connected to the vehicle body (12) so as to be movable, preferably pivotable, between a closed position and an open position;
a roof spoiler (62); and
an adjusting device (50), by means of which the roof spoiler (62) is adjustable in height, wherein the adjusting device (50) is arranged concealed behind the outer side panel (22) in the closed position of the outer side panel (22) and the adjusting device (50) is accessible from the outside in the open position of the outer side panel (22),
wherein:
the vehicle body (12) comprises a longitudinal side wall (34); and
the adjusting device (50) is arranged and/or secured on the longitudinal side wall (34).

2. The motor vehicle (10) according to claim 1, wherein:
the adjusting device (50) comprises a rail (64) by means of which the roof spoiler (62) is adjustable in height, wherein preferably:
the rail (64) is configured as an elongated hole; and/or
the rail (64) comprises a plurality of projections (66) arranged one above the other, to which the roof spoiler (62) can be detachably attached indirectly, preferably by means of a screw connection.

3. The motor vehicle (10) according to one of the preceding claims, further comprising:
an elongate connecting element (68), which connects the roof spoiler (62) to the adjusting device (50) in a height-adjustable manner and is preferably connected to the roof spoiler (62) in a pivotable manner; and
a panelling member (70) which is arranged between the roof spoiler (62) and the outer side panel (22), wherein the elongate connecting element (68) is arranged at least partially concealed behind the panelling member (70).

4. The motor vehicle (10) according to one of the preceding claims, wherein:
the vehicle body (12) comprises a roof (28) with a recess (72) and a front edge of the roof spoiler (62) dips into the recess (72) when the roof spoiler (62) is raised; and/or
the roof spoiler (62) is adjustable into a substantially vertical orientation for assembly or disassembly by means of the adjusting device (50).

5. The motor vehicle (10) according to claim 4, wherein:
the recess (72) extends over an entire width of the roof (28); and
a bottom surface of the recess (72) is bent, curved, and/or sloping towards both longitudinal outer sides of the motor vehicle (10).

6. The motor vehicle (10) according to one of the preceding claims, further comprising:
a windscreen cleaning system (54) with a cleaning fluid tank (56) and a filler nozzle (48) for filling the cleaning fluid tank (56), wherein the filler nozzle (48) is arranged concealed behind the outer side panel (22) in the closed position of the outer side panel (22) and the filler nozzle (48) is accessible from the outside in the open position of the outer side panel (22).

7. The motor vehicle (10) according to claim 6, wherein:
the filler nozzle (48) is arranged and/or fastened on the longitudinal side wall (34), preferably in an opening of the longitudinal side wall (34).

8. The motor vehicle (10) according to claim 6 or claim 7, wherein:
the cleaning fluid tank (56) is accessible and/or mountable from underneath the motor vehicle (10); and/or
the cleaning fluid tank (56) is arranged at least partially in a section between an inner mudguard (60) of the motor vehicle (10) and an outer mudguard (24) of the motor vehicle (10); and/or
the cleaning fluid tank (56) is arranged behind a door (20) of the motor vehicle (10) with respect to a forward travelling direction of the motor vehicle (10); and/or
the cleaning fluid tank (56) is arranged on the inside of a rear wall (16) of the vehicle body (12).

9. The motor vehicle (10) according to one of the preceding claims, further comprising
at least one tool (52), which is concealed by the outer side panel (22) in the closed position of the outer side panel (22) and is accessible from the outside in the open position of the outer side panel (22); and/or
at least one container (52), which is concealed by the outer side panel (22) in the closed position of the outer side panel (22) and is accessible from the outside in the open position of the outer side panel (22); and/or
at least one storage compartment (52), which is concealed by the outer side panel (22) in the closed position of the outer side panel (22) and is accessible from the outside in the open position of the outer side panel (22).

10. The motor vehicle (10) according to one of the preceding claims, wherein:
the outer side panel (22) is unlockable and/or movable from the closed position by means of a Bowden cable (38) accessible within the vehicle body (12).

11. The motor vehicle (10) according to one of the preceding claims, wherein:
the vehicle body (12) is configured as a cab body of a lorry.

12. The motor vehicle (10) according to one of the preceding claims, wherein:
the outer side panel (22) is configured as a sideflap; and/or
the outer side panel (22) is arranged in a closed position angled outwards at an angle to a longitudinal axis of the motor vehicle (10), so that preferably a rear edge of the outer side panel (22) is aligned with a side wall (30) of a cargo body (14), a trailer, or a semi-trailer of the motor vehicle (10), preferably substantially flush.

13. The motor vehicle (10) according to one of the preceding claims, wherein:
the outer side panel (22) is arranged above an outer mudguard (24) and/or a front axle (26) of the motor vehicle (10); and/or
the outer side panel (22) extends between an outer mudguard (24) of the motor vehicle (10) and a roof (28) of the motor vehicle (10).

14. The motor vehicle (10) according to one of the preceding claims, wherein:
the outer side panel (22) is pivotable rearwardly from the closed position into the open position with respect to a forward travelling direction of the motor vehicle (10); and/or
the outer side panel (22) comprises a straight rear edge and an at least partially curved front edge with respect to a forward travelling direction of the motor vehicle (10); and/or
the motor vehicle (10) comprises a door (20), which is movably connected to the vehicle body (12), and the outer side panel (22) is arranged behind the door (20) with respect to a forward travelling direction of the motor vehicle (10).

## Revendications

1. Véhicule automobile (10), de préférence véhicule utilitaire, présentant :
une carrosserie (12) ;
un panneau latéral extérieur (22), qui est agencé sur un côté extérieur longitudinal du véhicule automobile (10) et qui est relié à la carrosserie (12) de manière mobile,
de préférence de manière pivotante, entre une position de fermeture et une position d'ouverture ;
un déflecteur de toit (62) ; et
un dispositif de réglage (50) au moyen duquel le déflecteur de toit (62) est réglable en hauteur, le dispositif de réglage (50) étant agencé de manière dissimulée derrière le panneau latéral extérieur (22) dans la position de fermeture du panneau latéral extérieur (22) et le dispositif de réglage (50) étant accessible de l'extérieur dans la position d'ouverture du panneau latéral extérieur (22),
dans lequel :
la carrosserie (12) présente une paroi latérale longitudinale (34) ; et
le dispositif de réglage (50) est agencé et/ou fixé sur la paroi latérale longitudinale (34).

2. Véhicule automobile (10) selon la revendication 1, dans lequel :
le dispositif de réglage (50) présente un rail (64) au moyen duquel le déflecteur de toit (62) est réglable en hauteur,
dans lequel de préférence :
le rail (64) est réalisé sous la forme d'un trou oblong ; et/ou
le rail (64) présente plusieurs saillies (66) agencées les unes au-dessus des autres, sur lesquelles le déflecteur de toit (62) peut être disposé de manière indirectement amovible, de préférence au moyen d'une liaison par vis.

3. Véhicule automobile (10) selon l'une quelconque des revendications précédentes, présentant en outre :
un élément de liaison allongé (68) qui relie le déflecteur de toit (62) au dispositif de réglage (50) de manière réglable en hauteur et qui est de préférence relié au déflecteur de toit (62) de manière pivotante ; et
une pièce d'habillage (70) agencée entre le déflecteur de toit (62) et le panneau latéral extérieur (22),
l'élément de liaison allongé (68) étant dissimulé au moins par sections derrière la pièce d'habillage (70).

4. Véhicule automobile (10) selon l'une quelconque des revendications précédentes, dans lequel :
la carrosserie (12) présente un toit (28) avec un renfoncement (72) et un bord avant du déflecteur de toit (62) s'enfonce dans le renfoncement (72) lors d'un réglage supérieur du déflecteur de toit (62) ; et/ou le déflecteur de toit (62) peut être réglé dans une orientation essentiellement verticale pour le montage ou le démontage au moyen du dispositif de réglage (50).

5. Véhicule automobile (10) selon la revendication 4, dans lequel :
le renfoncement (72) s'étend sur toute une largeur du toit (28) ; et
une surface de fond du renfoncement (72) est courbée, incurvée et/ou inclinée vers les deux côtés extérieurs longitudinaux du véhicule automobile (10).

6. Véhicule automobile (10) selon l'une quelconque des revendications précédentes, présentant en outre :
une installation de nettoyage de vitres (54) avec un réservoir de liquide de nettoyage (56) et une tubulure de remplissage (48) pour remplir le réservoir de liquide de nettoyage (56), la tubulure de remplissage (48) étant agencée de manière dissimulée derrière le panneau latéral extérieur (22) dans la position de fermeture du panneau latéral extérieur (22) et la tubulure de remplissage (48) étant accessible de l'extérieur dans la position d'ouverture du panneau latéral extérieur (22).

7. Véhicule automobile (10) selon la revendication 6, dans lequel :
la tubulure de remplissage (48) est agencée et/ou fixée sur la paroi latérale longitudinale (34), de préférence dans une ouverture de la paroi latérale longitudinale (34).

8. Véhicule automobile (10) selon la revendication 6 ou la revendication 7, dans lequel :
le réservoir de liquide de nettoyage (56) est accessible et/ou peut être monté depuis le dessous du véhicule automobile (10) ; et/ou
le réservoir de liquide de nettoyage (56) est au moins partiellement agencé dans une section entre une aile intérieure (60) du véhicule automobile (10) et une aile extérieure (24) du véhicule automobile (10) ; et/ou le réservoir de liquide de nettoyage (56) est agencé derrière une porte (20) du véhicule automobile (10) par rapport à une direction de marche avant du véhicule automobile (10) ; et/ou
le réservoir de liquide de nettoyage (56) est agencé à l'intérieur sur une paroi arrière (16) de la carrosserie (12).

9. Véhicule automobile (10) selon l'une quelconque des revendications précédentes, présentant en outre :
au moins un outil (52) qui est dissimulé par le panneau latéral extérieur (22) dans la position de fermeture du panneau latéral extérieur (22) et qui est accessible de l'extérieur dans la position d'ouverture du panneau latéral extérieur (22) ; et/ou
au moins un récipient (52) qui, dans la position de fermeture du panneau latéral extérieur (22), est dissimulé par le panneau latéral extérieur (22) et qui,
dans la position d'ouverture du panneau latéral extérieur (22), est accessible de l'extérieur ; et/ou au moins un compartiment de rangement (52) qui, dans la position fermée du panneau latéral extérieur (22), est dissimulé par le panneau latéral extérieur (22) et qui,
dans la position ouverte du panneau latéral extérieur (22), est accessible de l'extérieur.

10. Véhicule automobile (10) selon l'une quelconque des revendications précédentes, dans lequel :
le panneau latéral extérieur (22) peut être déverrouillé et/ou déplacé à partir de la position fermée au moyen d'un câble Bowden (38) accessible à l'intérieur de la carrosserie (12).

11. Véhicule automobile (10) selon l'une quelconque des revendications précédentes, dans lequel :
la carrosserie (12) est conçue sous la forme d'une carrosserie de cabine d'un camion.

12. Véhicule automobile (10) selon l'une quelconque des revendications précédentes, dans lequel :
le panneau latéral extérieur (22) est conçu sous la forme d'un volet latéral ; et/ou
le panneau latéral extérieur (22) est agencé, dans une position de fermeture, obliquement à un angle vers l'extérieur par rapport à un axe longitudinal du véhicule automobile (10), de telle sorte que, de préférence, un bord arrière du panneau latéral extérieur (22) est aligné, de préférence essentiellement à fleur, avec une paroi latérale (30) d'une structure de chargement (14), d'une remorque ou d'une semi-remorque du véhicule automobile (10).

13. Véhicule automobile (10) selon l'une quelconque des revendications précédentes, dans lequel :
le panneau latéral extérieur (22) est agencé au-dessus d'une aile extérieure (24) et/ou d'un essieu avant (26) du véhicule automobile (10) ; et/ou
le panneau latéral extérieur (22) s'étend entre une aile extérieure (24) du véhicule automobile (10) et un toit (28) du véhicule automobile (10).

14. Véhicule automobile (10) selon l'une quelconque des revendications précédentes, dans lequel :
le panneau latéral extérieur (22) peut pivoter vers l'arrière par rapport à une direction de marche avant du véhicule automobile (10) depuis la position de fermeture jusqu'à la position d'ouverture ; et/ou le panneau latéral extérieur (22) présente, par rapport à une direction de marche avant du véhicule automobile (10), un bord arrière droit et un bord avant courbé au moins par sections ; et/ou
le véhicule automobile (10) présente une porte (20) qui est reliée de manière mobile à la carrosserie (12), et le panneau latéral extérieur (22) est agencé derrière la porte (20) par rapport à une direction de marche avant du véhicule automobile (10).
